(19) **Europäisches Patentamt / European Patent Office / Office européen des brevets**

(11) **EP 4 752 846 A1**

(12) # EUROPEAN PATENT APPLICATION

(43) Date of publication:
03.06.2026  Bulletin 2026/23

(21) Application number: 24215848.3

(22) Date of filing: 27.11.2024

(51) International Patent Classification (IPC):
**G06V 10/141** (2022.01)    **G06V 10/143** (2022.01)
**G06V 10/25** (2022.01)    **G06V 10/82** (2022.01)
**G06V 20/58** (2022.01)    **G06V 10/80** (2022.01)

(52) Cooperative Patent Classification (CPC):
**G06V 20/58; G06V 10/141; G06V 10/143;**
**G06V 10/25; G06V 10/803; G06V 10/82;**
G06V 10/24; G06V 10/765

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **VALEO VISION**
  **93000 Bobigny (FR)**
• **Ecole Nationale Superieure des Mines de Paris**
  **75272 Paris cedex 06 (FR)**
• **Association pour la Recherche et le**
  **Développement**
  **des Méthodes et Processus Industriels -**
  **ARMINES**
  **75272 Paris, Cedex 06 (FR)**

(72) Inventors:
• **DE-MOREAU, Simon**
  **93000 BOBIGNY (FR)**
• **ALMEHIO, Yasser**
  **93000 BOBIGNY (FR)**
• **EL-IDRISSI, Hafid**
  **93000 BOBIGNY (FR)**
• **MOUTARDE, Fabien**
  **75272 PARIS (FR)**
• **BOGDAN, Stanciulescu**
  **75272 PARIS (FR)**

(74) Representative: **Aquinov**
  **35, Rue Tourat**
  **33000 Bordeaux (FR)**

(54) **DETECTING OBSTACLES FOR VEHICLES USING COMPUTER VISION BASED ON LOW-BEAM IMAGES**

(57)    The invention is notably directed to a computer-implemented method of detecting obstacles (40) in an area (45) adjacent a vehicle (2) based on low-beam images (32). A low-beam image (32) is an image of a given area, obtained by a camera (223) of the vehicle (2) at night or in low-light conditions while partially illuminating the given area (45) with a low-beam lighting system (236) of the vehicle (2). The method comprises repeatedly performing algorithmic cycles at a processing unit (110) of the vehicle (2). Each cycle comprises: accessing (S311) a low-beam image (32) of an area (45) adjacent the vehicle (2); running (S316) a computational model (50) based on the low-beam image (32) accessed, wherein the computational model is a computer vision model that was trained (S300) based on low-beam images (32) labelled in accordance with potential obstacles therein, for the computational model to detect one or more potential obstacles (40) in the low-beam image (32) accessed; and signalling (S318), in response to an obstacle (40) detected (S317: Yes) in the low-beam image (32) accessed, a control unit (250) of the vehicle (2) to autonomously trigger (S319) a behavioural change of the vehicle (2), such as braking of the vehicle. The model may advantageously rely on IR images obtained while fully illuminating the given area with a high-beam infrared lighting system (234) of the vehicle (2), so as to exploit complementarities between the two types of images. The invention is further directed to related computerized units and computer program products.

**FIG. 5**

**Description**

TECHNICAL FIELD

The invention is directed to computer-implemented methods of detecting obstacles in an area adjacent a vehicle based on low-beam images, which are images obtained by a camera of the vehicle at night or in low-light conditions while partially illuminating this area with a low-beam lighting system. The invention is further directed to computerized systems, vehicles, and computer program products. In particular, it is directed to a method for detecting obstacles near a vehicle using image pairs, instead of mere low-beam images. Each pair includes a low-beam image and a corresponding infrared image (the latter obtained while fully illuminating the area with a high-beam infrared lighting system). The goal is to enable autonomous vehicle responses like braking upon obstacle detection.

BACKGROUND

Self-driving vehicles (also known as autonomous vehicles or driverless vehicles) are vehicles that are capable of traveling with little, or even without, human inputs. Such vehicles use sensors (e.g., lidars, cameras, radars, sonars, GPS, and inertial measurement units) to perceive their surroundings. Sensory information is used to create a model of the vehicle's surroundings, and the model is used to generate a navigation path.

Computer vision is a rapidly advancing field of artificial intelligence that enables machines to interpret and understand visual information from the world. In the context of vehicle technology, computer vision is employed to enhance safety and navigation by allowing vehicles to detect and respond to obstacles.

Pedestrian detection is a key part of the vehicle safety. Besides autonomous vehicles, this type of detection is a part of all Automatic Emergency Braking (AEB) systems. Accidents are much more frequent at night or in low-light conditions, despite a significant reduction in traffic.

It therefore appears necessary for vehicle automation systems to reduce accidents at night or in conditions of reduced visibility. More generally, it would be desirable to have solutions allowing adapted responses from the vehicle when an obstacle is detected.

SUMMARY

Studying the causes of nighttime accidents in more detail, the present inventors observed that 80% of accidents involve pedestrians and that most accidents due to Automatic Emergency Braking (AEB) systems occur when low-beam (LB) lighting is used, instead of high-beam lighting. Looking for solutions to this problem, they arrived at the present invention, the embodiments of which are as follows.

According to a first aspect, the invention is embodied as a computer-implemented method of detecting obstacles in an area adjacent a vehicle based on LB images. In the present context, an LB image is an image of a given area, obtained by a camera of the vehicle at night or in low-light conditions, while partially illuminating the given area with an LB lighting system of the vehicle. The method comprises repeatedly performing algorithmic cycles at a processing unit of the vehicle. Each cycle of the algorithmic cycles comprises the following steps. First, the method accesses an LB image of an area adjacent the vehicle. This area is preferably an area ahead of the vehicle. Next, a computational model is run based on the LB image accessed for the computational model to detect one or more potential obstacles in the LB image accessed. The computational model is a computer vision model that is assumed to have already been trained based on LB images labelled in accordance with potential obstacles therein. Finally, the method comprises signalling a control unit of the vehicle, in response to an obstacle detected in the LB image accessed, for the control unit to autonomously trigger a behavioural change of the vehicle, such as braking of the vehicle (the control unit may for instance be a unit of an AEB system).

Computer vision models used for autonomously actuating vehicles are usually trained on daytime images (i.e., full images), such that they may fail at night or in poor light conditions. Even if one were to train a computer vision model based on nighttime images, such images would likely contain both high-beam (HB) and LB images, such that the resulting model would still likely demonstrate worse performance than a model trained on LB images. To solve this problem, the present solution relies on a computational model that is trained (or re-trained) on LB images, i.e., images obtained using LB illumination. The present method is all the more efficient (and thus advantageous) for detecting pedestrians, given their form factor, as an LB image would substantially cut off the shape of a pedestrian.

Note, the execution of the above algorithmic cycles may advantageously be triggered upon activation of the LB lighting system (e.g., whether by the driver or as a result of an automated actuation), as in embodiments. As a result, the above algorithmic cycles are repeatedly performed but only after the activation of the LB lighting system, something that improves the security, and eventually the performance, of the target control unit.

In embodiments, the method relies on image pairs, instead of mere LB images, where each image pair includes an LB image and a corresponding IR image. That is, the method is further based on infrared images. In the present context, an infrared (IR) image is obtained by an IR sensor; it is a full image of the given area. That is, an IR image is obtained in the same conditions as a corresponding LB image (i.e., at night or in low-light conditions). Still, an IR image is obtained while fully illuminating the given area with a high-beam IR lighting system of the vehicle, so that there is no risk of glare. So, an IR image is a full image, at variance with LB images as described above.

The computer vision model is now assumed to have been trained based on image pairs, each including an LB image and a corresponding IR image, labelled in accordance with potential obstacles therein. In addition to the step described earlier, each cycle further comprises, prior to running the computational model, accessing an IR image of said area. Accordingly, at each cycle, the computational model is run based on an image pair corresponding to the LB image and the IR image accessed. The computational model is run with a view to detecting one or more potential obstacles in said image pair. The control unit is signalled in response to an obstacle detected in the image pair.

The light sources and sensors are preferably forward-looking elements-an important goal being to prevent frontal collisions. In variants, or in addition, the detection may concern lateral or rear sides of the vehicle. Thus, multiple image pairs could be processed in parallel.

Note, as the LB and IR images are accessed and processed during a same algorithmic cycle, one understands that such images are contemporary images. I.e., they have been obtained at the same time or essentially the same time, so as to depict the same (or substantially the same) area, although not with the same degree of completeness. Given the goal to be achieved, the two images of any pair considered must be obtained at the same time, or approximately the same time, so that there is no significant difference between the positions of the objects depicted therein. The purpose of the present inferences implies that the time lag between two images of any pair must not be such that the model cannot exploit meaningful spatial correspondences between the objects represented in the two images.

So, as one understands, embodiments are directed to computer-implemented methods of detecting obstacles in an area adjacent a vehicle based on pairs of images, i.e., an LB image and an infrared image as defined above. Such methods comprise repeatedly performing algorithmic cycles at a processing unit of the vehicle. Each cycle of the algorithmic cycles comprises the following steps. First, the method accesses both an LB image and an infrared image of an area adjacent the vehicle, e.g., the area ahead of the vehicle. Next, a computational model is run based on both the LB image and the infrared image accessed. This computational model is assumed to be a computer vision model that was previously trained based on image pairs (i.e., an LB image and a corresponding infrared image) labelled in accordance with potential obstacles therein. The model is run to perform inferences, aiming at detecting one or more potential obstacles in the pair of images accessed. Any detected obstacle may be further analysed, if necessary, to avoid false positives, assess the distance, etc. Eventually, the method signals a control unit of the vehicle, in response to any obstacle detected in the image pair, for the control unit to trigger a behavioural change, such as braking of the vehicle, if necessary.

This approach makes it possible for the model to exploit both textures and shapes efficiently. Textures can still be exploited from LB images (e.g., RGB images), while full shapes (in particular pedestrian shapes) can be more easily recognised from the IR images. Still, given the two types of images used in each input pair, the model is more likely to learn to rely on shapes more than textures, contrary to what it usually does when trained on daytime images. Moreover, correlations between the IR and LB images can potentially be exploited by the model to improve inferences, hence a synergetic effect between the pairs of images considered. By exploiting correlations between the LB and IR images, the model is better able to detect obstacles.

In embodiments, the computational model includes a neural network with $n + 1$ parallel input channels. Each cycle further comprises, prior to running the computational model: decomposing the LB image accessed into $n$ channels, e.g., $n$ colour channels (where $n \geq 1$, preferably $n \geq 2$); and feeding data corresponding to the $n$ channels into $n$ input channels of the $n + 1$ parallel input channels, as well as data corresponding to the IR image accessed into a further input channel of the $n + 1$ parallel input channels. In preferred embodiments, $n \geq 2$. For example, $2 \leq n \leq 4$ or, even, $2 \leq n \leq 3$.

The above input architecture of the model results in effectively processing the IR image as an additional colour channel, in addition to the colour channel(s) corresponding to the LB image. The IR image nevertheless captures a more complete information than the associated LB image, at least in terms of shapes. This also means that the present approach is compatible with various computational models, starting with convolutional neural networks (CNNs), as data extracted from each type of images can be fed into distinct input channels of the model. If necessary, only a subset of input channels of the LB images can be considered, to match a prescribed number of input channels of the model, if any.

In embodiments, the neural network is configured to require only one forward propagation pass from the $n + 1$ parallel input channels to perform an inference with respect to a detection of a potential obstacle, which gives rise to much faster inferences. In other word, the model only sees the input images once and is able to identify objects in the image from this single pass. This makes it possible to markedly accelerate inferences, as desired at runtime.

In embodiments, each cycle further comprises transforming the LB image accessed. In particular, this may include registering the LB image accessed with the IR image accessed. Eventually, this is the transformed (e.g., registered) version of the LB image that is decomposed into the n channels (e.g., colour channels). Although not strictly needed, such transformations can make it easier to detect correction between any two input images, at each cycle.

In embodiments, the method further comprises, prior to repeatedly performing said algorithmic cycles, readying the computational model by accessing a trained version of the neural network. The latter is a network that has been trained based on images, preferably RGB images, labelled in accordance with potential obstacles therein. The method further comprises retraining the trained version of the network accessed based on said image pairs. So, instead of training the neural network, one may fine-tune a pretrained model based on image pairs, which can be synthetized, extrapolated, or simulated.

In embodiments, each of said area and said given area is an area ahead of the vehicle. That is, each of said camera and said IR sensor is configured to sense the area ahead of the vehicle. In that case, each of the LB lighting system and the high-beam IR lighting system is arranged at a front of the vehicle. This makes it possible to trigger a suitable response of the vehicle in case of a frontal collision risk, i.e., the most serious type of collision.

According to another aspect, the invention is embodied as a computerized system for detecting obstacles in an area adjacent a vehicle based on LB images. The computerized system includes a memory, as well as processing means configured to interact with the memory to implement all the steps of a method according to any of the embodiments described above.

According to a further aspect, the invention is embodied as a vehicle. The vehicle comprises a sensing system, which includes at least one camera and, preferably, at least one IR sensor. The vehicle further comprises a lighting system, which includes an LB lighting system and, preferably, a high-beam IR lighting system. Besides, the vehicle includes a control unit, which preferably is a braking control unit, and a computerized system as described above. Consistently with other aspects of the invention, this computerized system is configured to access images produced by the sensing system and is operatively connected to the control unit to signal the latter, so as to autonomously trigger a behavioural change of the vehicle, in operation. In embodiments, the sensing system includes the at least one IR sensor, and the lighting system includes the high-beam IR lighting system.

In embodiments, the lighting system includes a headlight system, which is configured to illuminate an area ahead of the vehicle. The sensing system is configured to sense said area, whereby each of the at least one camera and the at least one IR sensor, if any, is preferably arranged at a front of the vehicle.

The sensing system may advantageously comprise integrated devices. One or more of the integrated devices may for instance include, each, a dual light source, capable of illuminating both in the visible range and the IR range. Preferably, one or more other ones of the integrated devices integrate, each, one of the at least one camera and one of the at least one infrared sensor. Such integrated devices can easily be integrated into vehicles and thus enable the deployment of the present invention.

In embodiments, the high-beam IR lighting system includes one of more of: a set of one or more digital micromirror device (DMD) chips; a set of one or more LED arrays; and a set of one or more laser scan headlamps. Different type of lighting devices may possibly be used on different sides of the vehicles. For example, DMD chips or laser scan headlamps may be used at the front, whereas LED arrays may be used at the back.

According to a final aspect, the invention is embodied as a computer program product for detecting obstacles in an area adjacent a vehicle based on LB images, wherein the computer program product comprises a computer readable storage medium having program instructions embodied therewith, the program instructions executable by processing means to cause the latter to perform steps of a method according to any of the embodiments discussed above.

BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:

FIG. 1 schematically represents a general-purpose computerized system, suited for implementing one or more method steps as involved in embodiments of the invention;

FIG. 2 is a diagram of vehicle, which schematically depicts functional relationships between various systems and units of the vehicles, namely a braking control unit, a processing unit, a lighting system, and a perception system, as in embodiments of the invention;

FIG. 3 is a flowchart illustrating high-level steps of a method of detecting obstacles and autonomously responding to detected obstacles, according to embodiments;

FIGS. 4A and 4B schematically depict nighttime images, as involved in embodiments. FIG. 4A shows a low-beam image of an area ahead of a vehicle, obtained by a camera of the vehicle at night or in low-light conditions, while partially illuminating this area with a low-beam lighting system. FIG. 4B shows an infrared image of the same area, obtained by an infrared sensor of the vehicle concomitantly with the low-beam image, while fully illuminating the given area with a high-beam infrared lighting system of the vehicle; and

FIG. 5 is a diagram schematically illustrating how the low-beam image of FIG. 4A can be decomposed into distinct channels and fed into parallel input channel of a neural network, while the image of FIG. 5A is fed in a further input channel, with a view to performing inferences and detecting obstacles in the images, as in embodiments.

The accompanying drawings show simplified representations of devices or parts thereof, as involved in embodiments. Similar or functionally similar elements in the figures have been allocated the same numeral references, unless otherwise indicated.

Computer-implemented methods, computerized systems, vehicles, and computer program products embodying the present invention will now be described, by way of non-limiting examples.

DETAILED DESCRIPTION OF EMBODIMENTS OF THE INVENTION

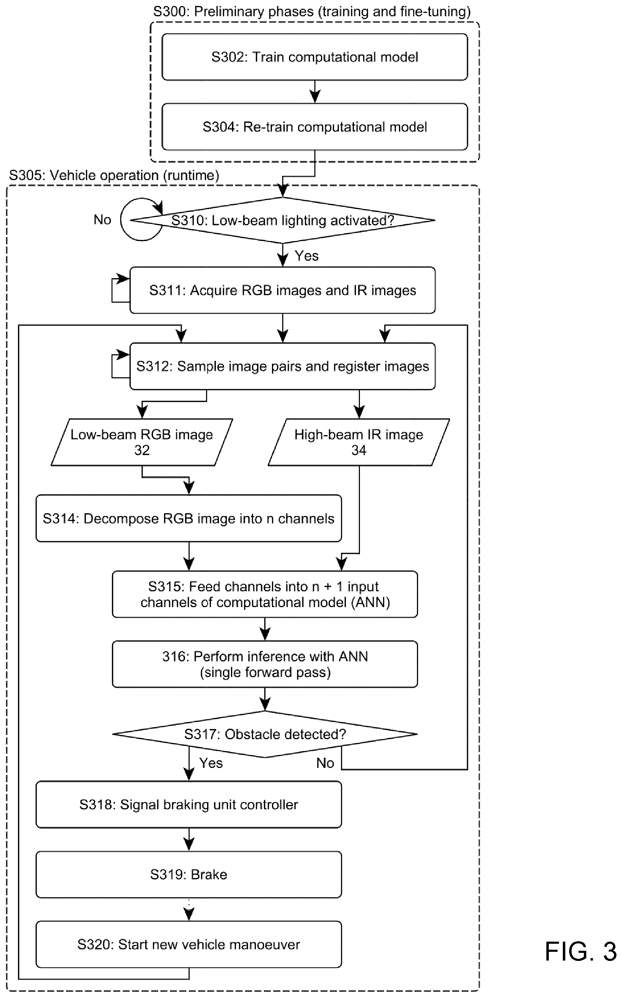

The following description is structured as follows. General embodiments and high-level variants are described in section 1. Section 2 addresses particularly preferred embodiments. Section 3 concerns technical implementation details. Note, the present method and its variants are sometimes collectively referred to as the "present methods" in this documents. All references Sn refer to methods steps of the flowcharts of FIG. 3, while numeral references pertain to devices, components, and concepts, as involved in embodiments of the present invention.

**1. General embodiments and high-level variants**

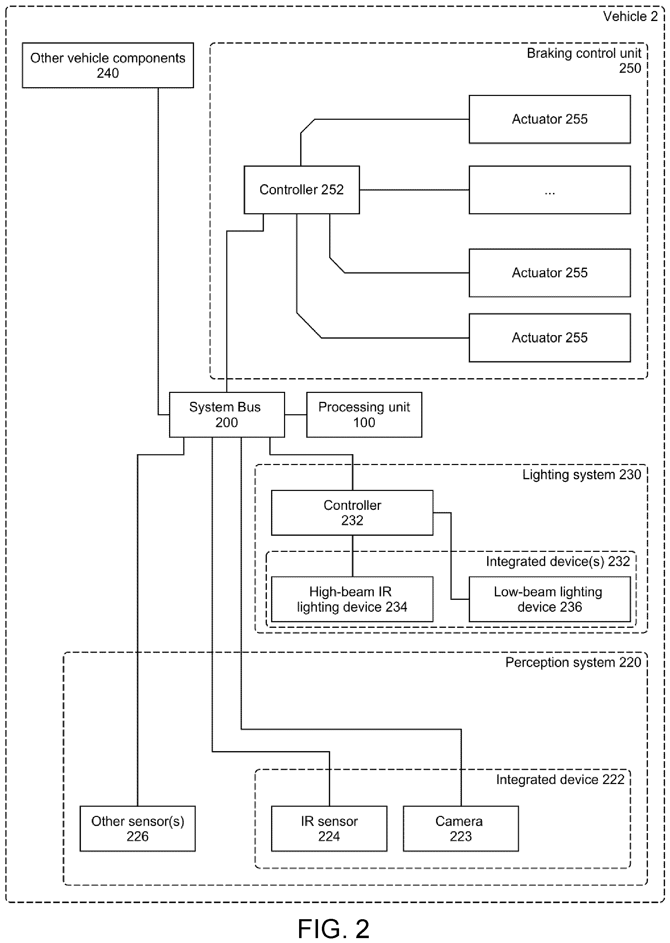

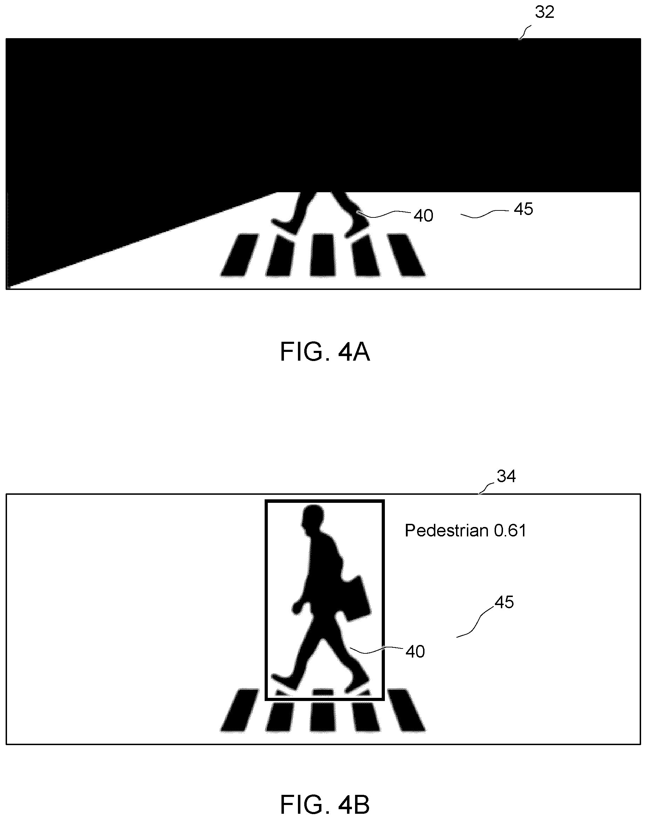

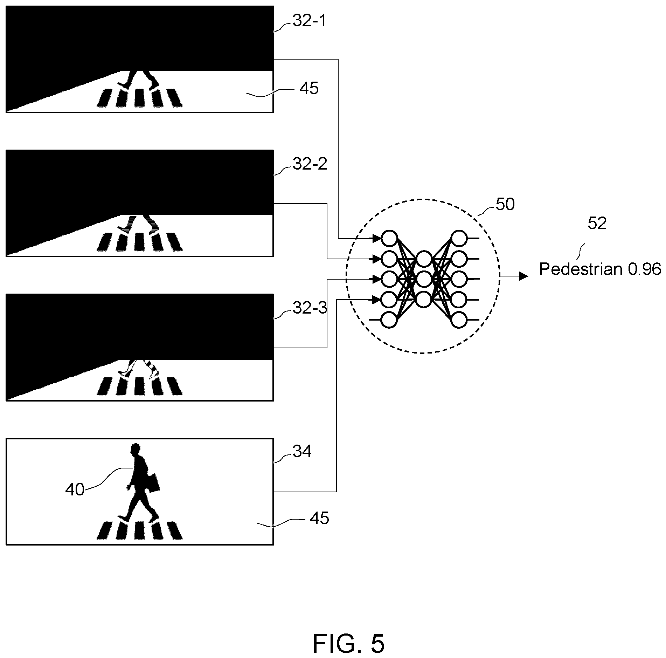

A first aspect of the invention is now described in detail, in reference to FIGS. 2 - 5. This aspect concerns a computer-implemented method of detecting obstacles 40 in an area 45 adjacent a vehicle 2, as illustrated in FIGS. 4A, 4B, and 5.

The method relies on a computational model 50 (or simply "model", for short), which uses low-beam (LB) images 32 for inferencing purposes at runtime (i.e., typically when the vehicle is running). The computational model is assumed to have been trained on similar LB images, during the training phase. In the present context, an LB image 32 is an image of a given area, typically an area ahead of a vehicle, as assumed in FIGS. 4A - 5. This image is obtained by a camera 223 of a vehicle, at night or in low-light conditions, while partially illuminating the given area 45 with an LB (or dipped beam) lighting system 236 of the vehicle.

The method revolves around repeatedly performing algorithmic cycles, which are performed at a processing unit 110 of the vehicle 2, see the diagram of FIG. 2. Each cycle comprises the following steps.

First, an LB image 32 is accessed at step S311 (see the flow of FIG. 3). The image accessed is an image of an area 45 adjacent the vehicle 2. The LB image is an image obtained by a camera 223 at night or in low-light conditions, while using one or more LB lighting devices. For this reason, an LB image is also referred to as an LB image in the following. This image is preferably a coloured image, typically an RGB image. In variants, this image is a grayscale image. Such LB images are only partial, insofar as upper part of such images will typically be very dark (or essentially black), as illustrated in FIG. 4A. In operation, LB images can for instance be accessed from a processing unit of a perception system 220 (see FIG. 2) or, alternatively, a mere sensing system. As usual, the vehicle 2 may include various types of sensors. A minima, it includes a camera 223, see FIG. 2. The processing unit of the perception system 220 is interfaced with sensors 223, 224, 226 of the vehicle.

Next, the computational model 50 is run (step S316) based on the LB image 32 accessed. This computational model is a computer vision model, which executes at runtime, i.e., in operation of the vehicle 2. The computational model 50 is run S316 to detect one or more potential obstacles 40 in the LB image 32 accessed. The model 50 is preferably a convolutional neural network (CNN), as discussed later in detail. In variants, the model is, or includes, a transformer, or somehow includes an attention mechanism. More generally, the model can be any supervised, machine learning (ML) model, which is assumed to have been suitably trained S300 earlier, so as to have learned its own parameters. In the present context, this model is assumed to have been trained S300 based on LB images comparable to images as used at runtime. During the training, however, the images used are labelled in accordance with potential obstacles depicted therein, so as to form input-output pairs. The outputs typically includes bounding boxes of the obstacles, as well as positions and dimensions of such bounding boxes, as know *per se*.

Eventually, the method signals S318 a control unit 250 of the vehicle 2, in response to any obstacle 40 detected (step S317: Yes) in the LB image 32 accessed. The control unit may for instance be, or form part of, a Braking Control Unit (BCU), a Vehicle Control Unit (VCU), or an Electronic Control Unit (ECU), also known as travel computer or vehicle computer. This control unit 250 may also be in data communication with, or form part of, an Advanced Driver Assistance System (ADAS). Signalling this control unit 250 causes the latter to autonomously trigger S319 a behavioural change of the vehicle 2 (i.e., a change in the vehicle's behaviour), such as braking of the vehicle, direction change, deceleration, and/or a change in the lighting system setting (e.g., light fading). Several actions can potentially be triggered, depending on where the obstacle is, an expected time-to-collision, the type of obstacle, etc.

The obstacles 40 can be static or dynamic obstacles. In particular, the obstacles may be pedestrians.

Now, the upper part of the LB images accessed typically contain no or very little information that can effectively be exploited by a computer vision model. This can notably be an issue for pedestrians, inasmuch as pedestrians are only partly lighted and as such, not recognisable by a computer vision model, should the latter have been trained on non-specialized data, hence the advantage of using a model 50 trained on LB images. Note, the model 50 can otherwise have the same architecture as a model trained on daytime images, as discussed later.

In the present context, the LB lights preferably form part of headlamps (or headlights), i.e., they form part of a lighting system providing forward illumination. LB images obtained from LB lights can notably be exploited to prevent front collisions. In principle, however, LB lights may potentially be provided as part of front, corner, side, or rear position lights. Similarly, sensors could be configured to sense areas on multiple sides of the vehicle. This way, LB images obtained from such lighting systems can be exploited to avoid collisions on any side of the vehicle 2 while manoeuvring the latter.

The vehicle 2 may possibly be partly or fully autonomous. Note, the terminologies "autonomous" and "automated" are sometimes used as synonyms. In general, "autonomous," "semi-autonomous," and "partly autonomous," refer to concepts that involve some self-governance of machines, whereby such machines are capable of sensing their environment to safely move therein, avoiding obstacles and collisions with other objects, whether static or in motion. In this document, the terminology "autonomous" is to be understood in a broad sense. I.e., an autonomous vehicle is a device that has sensing capability and is at least partly automated, so as to be at least partly autonomous, though not necessarily fully autonomous. In the present context, the vehicle 2 may incorporate automation to move (e.g., drive), whereby it can automatically drive from one location to another, by sensing its environment, such that it is aware of its location and surroundings.

The vehicle 2 can possibly have various levels of autonomy. For instance, the automated system of the vehicle may be capable of taking control of the vehicle for the latter to start, accelerate, brake, steer, and stop, so as to be able to move from one location to another. The autonomous vehicle 2 is a ground vehicle, typically an autonomous car. In principle, such vehicles can be of any type, e.g., cars, vans, transit buses, motorcoaches, trucks, lorries, or any other types of ground vehicles that may benefit from automation. In typical embodiments, though, the present autonomous vehicles are production cars, vans, electric vehicles, or the likes, which benefit from automatic driving and are at least level 2 (hands off), possibly level 3 (eyes off), level 4 (mind off), or level 5 (steering wheel optional), according to the system developed by SAE International.

In variants to autonomous driving, or in addition, the vehicle 2 may have some automation. This automation may for example concern one or more circuits to, e.g., automatically brake and/modify a current setting of the lighting system, in response to the signalling step S318.

In all cases, the commands formed in accordance with the detected obstacles 40 are forwarded (i.e., sent) to a relevant control unit 250. The commands formed may be high-level or low-level commands. In turn, the control unit 250 triggers an appropriate behavioural change, such as braking. This unit 250 is assumed to be a BCU in FIG. 2, for the sake of illustration, it being reminded that this unit 250 may actually be any, or form part, of the VCU, ECU, BCU, or the ADAS. The processing unit 100 implementing the above algorithmic cycles is on board the vehicle 2 and may itself form part of the VCU, ECU, BCU, or the ADAS. In variants, the processing unit is independent of the target control unit 250, as assumed in FIG. 2.

Normally, the computational model will mostly not send any command, unless one or more obstacles 40 are detected in an image (i.e., a frame), during any algorithmic cycle. That is, the processing unit 100 would, by default, not send any command, unless an obstacle is detected. A basic verification mechanism may possibly be implemented, if only to avoid false positives, whereby, e.g., an obstacle should be consecutively detected in at least $m$ consecutive frames ($m > 1$) for it to qualify as a true obstacle 40. Moreover, redundancy can be contemplated, if necessary, whereby, e.g., two or more processing units 100 execute in parallel, the decisions of which are then subjected to a majority vote.

The proposed solution has the following advantages. Computer vision models used for autonomously actuating vehicles are usually trained on daytime images, i.e., full images. This is why they may fail at night or in poor light conditions. Even if one were to train a computer vision model based on nighttime images, which would likely contain both high-beam (HB) images and LB images, such a model would still likely fail when fed with LB images for inferencing purposes. Having realized these issues, the present inventors propose to train (or re-train) a computational model on LB images. This way, the model can rely both on textures and shapes to detect obstacles such as pedestrians 40. The present method is all the more efficient and thus advantageous for detecting pedestrians, given their form factor. Indeed, an LB image may severely truncate the shape of a pedestrian, as illustrated in FIG. 4A.

Interestingly, the LB images 32 can advantageously be combined with additional, infrared (IR) images 34, as now discussed in detail. In the present context, an IR image 34 is a full image of the given area 45. At runtime, IR images are obtained by an IR sensor 224 of the vehicle 2, while fully illuminating the given area 45 with a HB infrared (HB-IR) lighting system 234 of the vehicle 2. Because the system 234 illuminates in the infrared range, there is no risk of glaring oncoming drivers or pedestrians.

The computer vision model 50 is now assumed to have been trained based on image pairs, where each pair includes an LB image 32 and a corresponding IR image 34, which are contemporary images. Each image pair is labelled in accordance with potential obstacles therein, using labels as described earlier, e.g., bounding boxes.

Accordingly, at runtime, each cycle further comprises accessing S311 an IR image 34 of the area 45, in addition to a corresponding LB image, prior to running the computational model 50. The model 50 is subsequently run S316 based on an image pair corresponding to the LB image 32 and the IR image 34 as accessed at step S311. The goal is again to detect one or more potential obstacles 40 in the image pair. The control unit 250 is then signalled in response (S317: Yes) to any obstacle 40 detected in the image pair.

As per the above approach, an IR image is always associated with a corresponding LB image, representing the same area, albeit partially. Conversely, the IR image is a full image since it is obtained while illuminating the area of interest with an HB-IR lighting system. By definition, each image pair is accessed during a same algorithmic cycle, such that the images 32, 34 are contemporary images. That is, each pair of images is obtained at the same time, or essentially the same time, although the model 50 may possibly compensate for slight delays.

Similarly, pair of contemporary images are used during the training, where such images depict substantially the same area, albeit differently. The images used for training purposes do not need to have been obtained thanks to the exact same sensors and lighting systems as used at runtime. Instead, for training or retraining purposes, synthetic training datapoints may automatically be formed from usual, full-view RGB images, by processing the latter so as to create, on the one hand, IR-like monochrome images and, on the other hand, LB-like images, e.g., by applying a mask corresponding to a dark area. Alternatively, one may directly simulate synthetic images of both types, rather than postprocessing existing ones. One can also use real data recordings which are manually annotated afterward.

By exploiting correlations between the LB images 32 and full IR images 34, the model 50 is better able to detect obstacles. Interestingly, given the characteristics of the two images 32, 34 used in each input pair, the model 50 is more likely to learn to rely on shapes more than textures, contrary to what computer vision models usually do when trained on daytime images. As a result, the present scheme does not only differ in terms of input data as used at runtime (i.e., pairs of LB and IR images) but also from a functional point of view, given that the parameters learned by the model 50 causes the latter to recognize obstacles more because of shapes than textures. That said, the overall architecture of the model may be the same as the architecture of a model trained based on daytime images, subject to input channels of the model, as now discussed in detail.

In principle, data extracted from the LB and IR images could be fed into a single input channel of the computational model. Preferably, however, such data are fed into distinct input channels. That is, in embodiments, the computational model 50 includes a neural network 50, such as a CNN, with $n + 1$ parallel input channels, where $n \geq 1$. Among these channels, $n$ channels are used to feed S315 data extracted from the LB images 32, while data extracted from the IR images are fed S315 into the $n + 1$th input channel. At least one channel is used for the LB image (i.e., $n \geq 1$), although $n$ will typically be larger in practice (e.g., $n \geq 2$, 3, or 4). The extracted data will usually consist of pixel intensity values extracted from a respective channel. Alternatively, lower-dimensional features could be extracted from the respective channels and then fed into respective input channels. The same approach is used during the training phase and the inference phase, except that the model 50 is additionally fed with labels during the training phase, as usual with supervised learning.

Accordingly, at runtime, each cycle further comprises decomposing S314 the LB image 32 accessed into $n$ channels and feeding S315 data corresponding to these $n$ channels into $n$ input channels of the $n + 1$ parallel input channels. Similarly, data corresponding to the IR image 34 (a single channel) are fed into a further input channel of the $n + 1$ parallel input channels. The computational model is subsequently run S316 (i.e., executed) based on data fed into these input channels.

In principle, $n$ will be larger than or equal to 1, it being reminded that the model includes $n + 1$ parallel input channels. This means that the computational model 50 includes two or more input channels, in total. In practice, $n$ is typically between 2 and 4, i.e., $2 \leq n \leq 4$, and likely equal to 3 or 4, depending on the image format used, e.g., RGB, YUV, or CMYK. Still, one or more channels of the LB images could possibly be dropped, should they be found not to improve the results.

Preferred embodiments make use of RGB images, having three channels (corresponding to references 32-1, 32-2, 32-3 in figure 5). Data corresponding to such channels are fed into three input channels of the model 50. Use will normally be made of the same input channels, e.g., the same first three input channels for RGB images. For example, data 32-1 - 32-3 extracted from the red (R), green (G), and blue (B) channels are always fed into the first, second, and third input channel of the neural network 50, respectively, while data extracted from the corresponding IR image 34 are fed into its fourth input channel, as assumed in FIG. 5.

The above embodiment amounts to effectively processing the IR image 34 as an additional colour channel, which nevertheless captures a spatially more complete information than its associated LB image 32. As a result, the present approach is compatible with various computational models, starting with CNNs, as data extracted from each type of images can be feed into distinct input channels of the CNN. If necessary, only a subset of input channels of the LB images can be considered, to match a prescribed number of input channels of the model, if any. Feeding extracted data into $n + 1$ input channels as described above provides more flexibility, insofar as this gives the model the opportunity to learn from differences between the data fed into the various channels, particularly from the differences between data fed into the first $n$ channels and the $n + 1$th channel. Eventually, the model can still exploit both textures and shapes efficiently, even if the model might tend to rely more on shapes, as noted earlier. Textures from the LB images 32 (e.g., RGB images) can still be exploited, while full shapes (in particular pedestrian shapes) can be more easily recognised from the IR images 34. Moreover, correlations between the LB and HB images can potentially be exploited by the model 50 to improve inferences, hence a synergetic effect between the pairs of images considered.

Note, texture can be described as small-scale structure, resulting from the spatial arrangement of colour or intensities, while shapes typically concern larger-scale structure, such as contours of objects. Texture can already be found in grayscale images. However, the larger the number of input channels, the more likely it is for the model 50 to be able to exploit textures efficiently.

FIGS. 4A, 4B, and 5, illustrate the benefits of the present approach for pedestrian detection. A sole LB image 32 (FIG. 4A) of a pedestrian 40 is unlikely to be detected by a model trained on daytime images. Conversely, a sole IR image 34 may possibly lead to a correct detection (FIG. 4B), albeit with a mild probability (0.61 in this example) when using a model trained on daytime images, as this model would likely have learned its parameters based on daytime-like textures and shapes. However, using data extracted from both an LB image 32 and an IR image 34 of the same pedestrian 40 is likely to improve the detection by the model 50, see FIG. 5, where the probability 52 of rightfully detecting the pedestrian now reaches 0.96 in this example.

In the examples of FIG. 4A - 5, the illuminated area 45 is an area ahead of the vehicle 2, as assumed in most embodiments described herein, for the sake of illustration. This, in practice, means that the camera 223 and the IR sensor 224 are configured to sense the area 45 ahead of the vehicle 2, see also FIG. 2. Consistently, each of the LB lighting system 236 and the HB-IR lighting system 234 is assumed to be arranged at the front of the vehicle 2 in this case. That is, the components 223, 224, 234, 236 have a forward-looking configuration.

In embodiments, the neural network 50 (preferably a CNN) is configured to require only one forward propagation pass to perform an inference with respect to a detection of a potential obstacle. That is, after feeding data into the $n + 1$ parallel input channels, such data are gradually processed and transformed throughout downstream neural layers (not shown) in a feedforward fashion, using a single pass, to arrive at one or more arrays of values (typically of lower dimensionality than the input layers) permitting a suitable inference. In other word, the model only looks at the image once and is nevertheless able to identify objects in the image from this single pass. This makes it possible to markedly accelerate inferences, as desired at runtime.

A preferred CNN architecture is one that involves several block (repeated $n + 1$ times according to the feature space), where each block contains a series of alternated convolution layers and max pool layers. Such blocks are followed by a series of fully connected layers.

The object detection problem is preferably formulated thanks to several loss functions, which combine detection, localization, and classification of objects. To that aim, three types of loss functions are used, i.e., a box loss, an object loss, and a class loss. The first loss represents the localization loss of positive box predictions, using Complete Intersection over Union (complete IOU or CIOU). The object loss represents the CIOU loss of the detection and true boxes, which is defined as a binary cross entropy loss. Finally, a binary cross-entropy loss is used for the class loss, which represents the classification loss of the positive predictions. The training may for instance use a stochastic gradient descent (SGD) optimizer, although other optimizers can be contemplated, such as the so-called Adam and AdamW optimizers. For completeness, the CNN may possibly be designed so as to divide an input images into a grid and predict, for each grid cell, a number of bounding boxes and class probabilities. In other words, this architecture divides an image into grid cells and predicts the bounding boxes and class probabilities for each cell. The model also predicts a confidence score along with each bounding box. Reconciling results obtained for each cell makes it possible to arrive at bounding box detections for each frame.

Such an architecture allows efficient obstacle detections with a single forward pass. For instance, use can be made of a so-called YOLO pre-trained network (e.g., YOLOv3 to YOLOv10, preferably YOLOv5 to YOLOv10). In variants, of-the-shelve models (e.g., CNNs) can be contemplated, which preferably include spatial attention mechanisms.

In variants to YOLO-type architectures, other schemes can be contemplated, which rely on single forward propagation passes, such as fast R-CNN architectures. One may, in other (albeit less preferred) variants, rely on schemes using multiple forward propagation pass networks, such as older R-CNN approaches. In variants to CNNs, however, other network architectures can be contemplated, such as architectures based on transformers or other architectures allowing attention mechanisms. Note, the input images may be pre-processed (e.g., denoised and normalized), if necessary. In addition, the LB images 32 may be converted to another image format (e.g., from RGB to YUV), if necessary, before decomposing the converted images into separate channels. Moreover, the images accessed may possibly be transformed, before being fed into the model 50, whether for training or inferencing purposes. In practice, transforming the image accessed may notably result in cropping, resizing, and/or rescaling the LB image; the transformed image would nevertheless typically have the same resolution as the initial image. So, in embodiments, each cycle further comprises transforming S312 the LB image 32 accessed, prior to decomposing S314 it into n colour channels. In particular, the transformation may include a registration, to align the LB image and the IR image to a common observational frame of reference. So, each cycle preferably comprises a step of registering S312 the LB image 32 accessed with the IR image 34 accessed, whereby, e.g., a registered version of the LB image 32 is decomposed S314 into the $n$ colour channels. This is not strictly needed, in practice, for a neural network such as a CNN. But this can be advantageous as it makes it easier to detect correlation between the two input images, at each cycle.

The following more specifically concerns the training of the model 50, i.e., steps performed prior to repeatedly performing the algorithmic cycles for inferencing purposes. One possibility is to train the model from scratch. Another, more convenient possibility is to retrain the model based on a pre-trained version thereof. So, in embodiments, the method further comprises readying S300 the computational model 50 by accessing a pre-trained version of the underlying neural network, and retraining S304 the pre-trained version accessed based on image pairs. The pretrained version of the model is assumed to have been trained based on images of a single type, e.g., daytime RGB images, where such images are labelled in accordance with potential obstacles 40 therein, as explained earlier. The model is then retrained S304 (or fine-tuned), now based on image pairs, where each pair includes an LB image and an IR image.

For example, the network 50 may just need to be configured to accommodate an additional input channel for IR images 34. This may, in practice, boil down to changing a hyperparameter of the computer vision model. When using YOLO, for example, this means changing a parameter to accommodate four input channels instead of three parameters (as set by default), which amounts to changing the first layer to adapt the number of input channels.

Note, the execution of the algorithmic cycles as described herein may be triggered upon activation S310 of the LB lighting system (e.g., whether by the driver or as a result of an automated actuation), as in embodiments. As a result, such algorithmic cycles are repeatedly performed but only after the activation of the LB lighting system. In other words, activating the LB headlights triggers the use of a computational model that is specifically adapted to this type of lighting, hence allowing the performance, and therefore the safety of, the target control unit 250 to be improved.

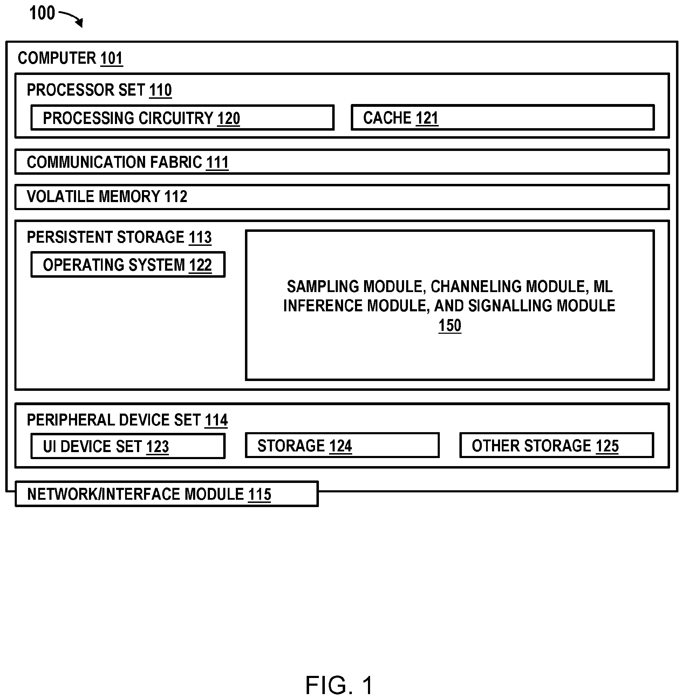

Referring now more specifically to FIGS. 1 and 2, another aspect of the invention concerns a computerized system 100, which may include one or more computerized units 100 such as shown in FIG. 1. In this example, the unit essentially boils down to a computer 101. The system 100 is implemented as a processing unit 100 in the example of FIG. 2. This unit 100 includes a memory 112, 113, 121. This memory may notably include persistent storage 113, storing computerized methods in the form of software or other instructions, which can be loaded in the main memory 112, and possibly cached 121. The unit 100 further comprise processing means 110, which may also include hardware accelerators (not shown), e.g., to accelerate executions of vector-matrix operations involved when executing the model 50. In all cases, the processing means 110 are configured to interact with the memory (starting with the volatile memory 112 and cache memory 121) to implement steps of any of the present methods, as described earlier. As noted earlier, too, this unit 100 may for instance form part of an ECU, VCU, BCU, or ADAS, of the vehicle 2, or be an independent processing unit 100, as assumed in FIG. 2.

A closely related aspect of the invention concerns a computer program product, which includes software code adapted to perform steps of a method according to any of the embodiments described earlier, when executed by processing means 110 as described above. The computer program product comprises a computer readable storage medium having program instructions embodied therewith. The program instructions are executable by processing means 110 (e.g., of a computer 101 as shown in FIG. 1) to cause the latter to perform steps of a method according to any of the embodiments described earlier in reference to the first aspect of the invention. Section 3 provides additional implementation details related to computer program products and computerized systems such as shown in FIG. 1.

Referring back to FIG. 2, a further aspect of the invention concerns a vehicle 2. The vehicle comprises a sensing system 220, itself including at least one camera 223 and, preferably, at least one IR sensor 224. The vehicle 2 further includes a lighting system 230, which comprises an LB lighting system 236 and, preferably, a HB-IR lighting system 234. The vehicle 2 also includes a control unit 250, which, e.g., forms part of, or is, an ECU, a VCU, a BCU, or an ADAS. The control unit 250 is assumed to be a BCU in the example of FIG. 2. The vehicle 2 further includes a computerized system 100 (a mere processing unit 100 in the example of FIG. 2) such as described above.

The unit 100 is configured to access images produced by the sensing system 220 and is operatively connected to the control unit 250 to signal the latter S318 and autonomously trigger S319 a behavioural change of the vehicle 2, in operation. In the example of FIG. 2, the unit 100 is distinct from the BCU 250 and typically forms part of an ECU or VCU. However, it should be kept in mind that several other configurations are possible. For example, the unit 100 may form part of the BCU 250, at variance with FIG. 2.

In embodiments, the sensing system 220 includes at least one IR sensor 224. In addition, the lighting system 230 includes the HB-IR lighting system 234, whereby the unit 100 can process pairs of images 32, 34, consistently with preferred embodiments as described earlier in reference to the first aspect of the invention. The lighting system 230 may include one or more set of lighting elements, as usual in the art.

Preferred applications concern forward detection. So, the lighting system 230 includes a headlight system, configured to illuminate the area 45 ahead of the vehicle 2. The sensing system 220 is configured to sense this area 45. I.e., at least one camera 223 and at least one IR sensor 224 are arranged at the front of the vehicle 2 or, more generally, are configured as forward-looking sensors. In practice, the lighting system 230 typically include two LB devices (one on each side at the front of the vehicle), e.g., forming part of usual headlamp devices. The latter may further include a respective HB-IR lighting device 234, integrated therewith. In variants, a single HB-IR lighting is provided at the front, separately from the headlamps. Such devices connect to a controller 232, which typically receives signals from an ECU/VCU, in operation.

The HB-IR lighting system 234 may for instance include one or more digital micromirror device (DMD) chips. In variants, the system 234 includes one or more LED arrays. Another possibility is to rely on laser scan headlamps, as known *per se.* Similarly, LED arrays and laser scan headlamps may be used for illumination in the visible spectrum, as known *per se.*

In sophisticated embodiments, the vehicle 2 comprises one or more integrated devices 232 (as assumed in FIG. 2) for dual emission in the visible and IR spectra, each integrating light sources for illumination in both the visible and IR spectra. Use can for instance be made of a dual DMD-like architecture.

Concerning the sensing, use is preferably made of a front camera 223, which is typically arranged about the rearview mirror. In addition, an IR sensor (e.g., an IR camera) can be integrated in the front camera (as assumed in FIG. 2, see integrated element 222). Examples of such devices are known from Omnivision (https://www.ovt.com/technologies/rgb-ir-technology/). In variants, the IR sensors is arranged next to the RGB sensor, for example.

For completeness, the vehicle 2 may include other sensors 226, which may form part of the perception system 220 (or a mere sensing system), and other vehicle components 240. Electronic components communicate through a system bus 200. In operation, when the processing unit 100 signals the BCU 250, a controller 252 of the control unit 250 (e.g., a BCU) receives a corresponding signal, which is turned into appropriate commands for actuators (or other components) 255. In variants to a BCU, the processing unit 100 may signal the ADAS, or any other control unit of the vehicle, for it to trigger any suitable behavioural change in the vehicle, in response to an obstacle detection.

The above embodiments have been succinctly described in reference to the accompanying drawings and may accommodate a number of variants. Several combinations of the above features may be contemplated. Examples are given in the next section.

## 2. Particularly preferred embodiments

### 2.1. Preferred system

A preferred system is one that makes it possible to efficiently detecting pedestrians, thanks to an ML model leveraging image pairs obtained while illuminating an area ahead of the vehicle with multiple light sources, relying on DMD chips or another type of dual, high-definition lighting system (combining white and IR headlights). Images are received from a combined RGB-IR camera 222. Training the ML model 50 on such image pairs causes the model to rely more on IR images at runtime. Still, the model 50 has learned the specific features of the lower part of pedestrian bodies from LB images (e.g., RGB), that is, legs, belt, shoes, shape, etc. Meanwhile, the model has also learned full body features in IR modality. The proposed system improves accuracy and reliability of pedestrian detection, which enhances safety.

### 2.1. Preferred flow

The following describes a particularly preferred flow of operation, which is captured in FIG. 3. The preliminary phase S300 concerns the training and fine-tuning of the computational model 50, i.e., a CNN. The CNN is initially trained at step S302 based on RGB images, labelled in accordance with any potential obstacle therein. The trained model is subsequently accessed and retrained S304 based on image pairs, suitably labelled.

At runtime (phase S305), the activation of the LB lighting system is monitored (S310: Yes/No) and a specific routine is triggered upon activation (S310: yes) of the LB lighting system, whereby the vehicle 2 starts repeatedly acquiring S311 RGB images 32 and IR images 32. Such images can possibly be sampled S312, preferably at a constant frequency, to accommodate the downstream processing speed. In variants, the sampling frequency is adaptively modified, thanks to feedback from the inferencing module 150, see FIG. 1. The selected images are then transformed, and possibly registered, if necessary. All this occurs while illuminating a given area ahead of the vehicle with both an LB lighting system and a HB-IR lighting system.

At each cycle, an RGB image 32 is decomposed into three colour channels (R, G, B). Data (e.g., pixel intensity values) extracted from these channels are fed S315 into three input channel of the CNN 50, while data extracted from the IR image are fed S315 into a further input channel of the CNN. The CNN 50 is thus run S316 based on both the LB image 32 and the IR image 34, to perform inferences aiming at detecting one or more potential obstacles in the pair of input images. Any detected obstacle may be further analysed, if necessary, to avoid false positives, assess the distance, etc.

Eventually, if an obstacle is detected (S317: Yes), the processing unit signals S318 the BCU for it to take action and brake (step S319). A new vehicle manoeuvre may then start, step S320, whether autonomously or not. The process loops back to step S312, where a next set of a sampled image pair is selected for further processing. If no obstacle is detected at step S317 (S317: No), the flow simply loops back to step S312, whereby the inference process repeats for the next image pair selected.

## 3. Technical implementation details

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

CPP embodiment is a term used in the present disclosure to describe any set of one, or more, storage media (also called mediums) collectively included in a set of one, or more, storage devices that collectively include machine readable code corresponding to instructions and/or data for performing computer operations specified in a claim. A storage device is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: hard disk, random access memory (RAM), read-only memory (ROM), erasable programmable read-only memory (EPROM or Flash memory), static random-access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing.

A computer readable storage medium is not to be construed as storage in the form of transitory signals per se, such as radio waves or other freely propagating electromagnetic waves, electromagnetic waves propagating through a waveguide, light pulses passing through a fibre optic cable, electrical signals communicated through a wire, and/or other transmission media. As will be understood by the skilled person, data is typically moved, on occasions, during normal operations of a storage device, such as during access, de-fragmentation, or garbage collection, but this does not render the storage device as transitory because the data is not transitory while it is stored.

The computerized system 100 defines a computing environment for the execution of at least some of the computer code involved in performing the present methods, such as steps S312 - S318 as described earlier. In addition to block 150, the computing environment includes computer 101. In this embodiment, computer 101 includes processor set 110 (including processing circuitry 120 and cache 121), communication fabric 111, volatile memory 112, persistent storage 113 (including operating system 122 and block 150, as identified above), peripheral device set 114 (including user interface (UI) device set 123, storage 124, and peripheral storage 125), and network/interface module 115.

COMPUTER 101 may take the form of any general or specific-purpose computer that is capable of running a program. Computer 101 is assumed to include one or several interface units that allows it to receive and send data. As is well understood in the art of computer technology, and depending upon the technology, performance of a computer-implemented method may be distributed among multiple computers and/or between multiple locations. That said, the following discussion is focused on a single computer, specifically computer 101, in the interest of simplicity.

PROCESSOR SET 110 includes one, or more, computer processors of any type now known or to be developed in the future. Processing circuitry 120 may be distributed over multiple packages, for example, multiple, coordinated integrated circuit chips. Processing circuitry 120 may implement multiple processor threads and/or multiple processor cores. Cache 121 is memory that is located in the processor chip package(s) and is typically used for data or code that should be available for rapid access by the threads or cores running on processor set 110. Cache memories are typically organized into multiple levels depending upon relative proximity to the processing circuitry. Alternatively, some, or all, of the cache for the processor set may be located off chip.

Computer readable program instructions are typically loaded onto computer 101 to cause a series of operational steps to be performed by processor set 110 of computer 101 and thereby effect a computer-implemented method, such that the instructions thus executed will instantiate the methods specified in flowcharts and/or narrative descriptions of computer-implemented methods included in this document (collectively referred to as the present methods). In operation, these computer readable program instructions are stored in various types of computer readable storage media, such as cache 121 and the other storage media discussed below. The program instructions, and associated data, are accessed by processor set 110 to control and direct performance of the present methods. In the computing environment defined by the system 100, at least some of the instructions for performing the present methods may be stored in block 150 in persistent storage 113.

COMMUNICATION FABRIC 111 is the signal conduction path that allows the various components of computer 101 to communicate with each other. Typically, this fabric is made of switches and electrically conductive paths, such as the switches and electrically conductive paths that make up buses, bridges, physical input / output ports and the like. Other types of signal communication paths may be used, such as fibre optic communication paths and/or wireless communication paths.

VOLATILE MEMORY 112 is any type of volatile memory now known or to be developed in the future. Examples include dynamic type random access memory (RAM) or static type RAM. Typically, volatile memory 112 is characterized by random access, but this is not required. In computer 101, the volatile memory 112 is located in a single package and is internal to computer 101, but, alternatively or additionally, the volatile memory may be distributed over multiple packages and/or located externally with respect to computer 101.

PERSISTENT STORAGE 113 is any form of non-volatile storage for computers that is now known or to be developed in the future. The non-volatility of this storage means that the stored data is maintained regardless of whether power is being supplied to computer 101 and/or directly to persistent storage 113. Persistent storage 113 may be a read only memory (ROM), but typically at least a portion of the persistent storage allows writing of data, deletion of data and re-writing of data. Some familiar forms of persistent storage include solid-state storage devices. Operating system 122 may take several forms, such as various known proprietary operating systems or open-source Portable Operating System Interface-type operating systems that employ a kernel. The code included in block 150 typically includes at least some of the computer code involved in performing the present methods.

PERIPHERAL DEVICE SET 114 includes the set of peripheral devices of computer 101. Data communication connections between the peripheral devices and the other components of computer 101 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In the present context, however, a preferred bus standard used is the so-called controller area network (CAN) vehicle bus standard (CAN bus). In various embodiments, UI device set 123 may include components such as a display screen, speaker, microphone, wearable devices (such as goggles and smart watches), keyboard, mouse, printer, touchpad, game controllers, and haptic devices. Storage 124 is external storage, such as an external hard drive, or insertable storage, such as an SD card. Storage 124 may be persistent and/or volatile. In embodiments where computer 101 is required to have a large amount of storage (for example, where computer 101 locally stores and manages a large set of images) then this storage may be provided by peripheral storage devices 125 designed for storing very large amounts of data, such as a storage area network (SAN) that is shared by multiple, geographically distributed computers.

NETWORK/INTERFACE MODULE 115 is a collection of computer software, hardware, and firmware, which allows computer 101 to communicate with other computers or units, e.g., through WAN. Network module 115 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 115 are performed on the same physical hardware device. In other embodiments (for example, embodiments that utilize software-defined networking (SDN)), the control functions and the forwarding functions of network module 115 are performed on physically separate devices, such that the control functions manage several different network hardware devices. Computer readable program instructions for performing the present methods can typically be downloaded to computer 101 from an external computer or external storage device through a network adapter card or network interface included in network module 115.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant or shown in a drawing may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched above can be contemplated. For example, other NN architectures, clustering techniques, and pattern recognition techniques can be contemplated.

**Claims**

1. A computer-implemented method of detecting obstacles (40) in an area (45) adjacent a vehicle (2) based on low-beam images (32), a low-beam image (32) being an image of a given area, obtained by a camera (223) of the vehicle (2) at night or in low-light conditions while partially illuminating the given area (45) with a low-beam lighting system (236) of the vehicle (2), wherein the method comprises repeatedly performing algorithmic cycles at a processing unit (110) of the vehicle (2) and each cycle of the algorithmic cycles comprises:

   accessing (S311) a low-beam image (32) of an area (45) adjacent the vehicle (2),
   running (S316) a computational model (50) based on the low-beam image (32) accessed, wherein the computational model is a computer vision model that was trained (S300) based on low-beam images (32) labelled in accordance with potential obstacles therein, for the computational model to detect one or more potential obstacles (40) in the low-beam image (32) accessed, and
   signalling (S318), in response to an obstacle (40) detected (S317: Yes) in the low-beam image (32) accessed, a control unit (250) of the vehicle (2) to autonomously trigger (S319) a behavioural change of the vehicle (2), such as braking of the vehicle.

2. The computer-implemented method according to claim **1,** wherein

   the computer-implemented method is further based on infrared images, an infrared image (34) being a full image of the given area (45), obtained by an infrared sensor (224) of the vehicle (2) at night or in low-light conditions while fully illuminating the given area with a high-beam infrared lighting system (234) of the vehicle (2), said computer vision model (50) was trained based on image pairs, each including a low-beam image (32) and a corresponding infrared image (34), labelled in accordance with potential obstacles therein,
   said each cycle further comprises, prior to running the computational model, accessing (S311) an infrared image (34) of said area (45), whereby, at said each cycle,
   the computational model (50) is run (S316) based on an image pair corresponding to the low-beam image (32) accessed and the infrared image (34) accessed, for the computational model to detect one or more potential obstacles (40) in said image pair, and
   the control unit (250) is signalled in response (S317: Yes) to an obstacle (40) detected in the image pair.

3. The computer-implemented method according to claim 2, wherein

   said computational model (50) includes a neural network (50) with $n + 1$ parallel input channels, and
   said each cycle further comprises, prior to running (S316) the computational model: decomposing (S314) the low-beam image (32) accessed into $n$ channels, where $n \geq 1$, preferably $n \geq 2$, and
   feeding (S315) data corresponding to the $n$ channels into $n$ input channels of the $n + 1$ parallel input channels, as well as data corresponding to the infrared image (34) accessed into a further input channel of the $n + 1$ parallel input channels.

4. The computer-implemented method according to claim 3, wherein

$$n \geq 2,$$

   preferably, $2 \leq n \leq 4$, and
   more preferably $2 \leq n \leq 3$.

5. The computer-implemented method according to claim **3** or **4,** wherein
   said neural network (50) is configured to require only one forward propagation pass from the $n + 1$ parallel input channels to perform an inference with respect to a detection of a potential obstacle.

6. The computer-implemented method according to any one of claims **3** to **5,** wherein
   said each cycle further comprises transforming (S312) the low-beam image (32) accessed, and preferably registering (S312) the low-beam image (32) accessed with the infrared image (34) accessed, whereby a transformed version, in particular a registered version, of the low-beam image (32) is decomposed (S314) into said n channels.

7. The computer-implemented method according to any one of claims **2** to **6,** wherein the method further comprises, prior to repeatedly performing said algorithmic cycles, readying (S300) the computational model (50) by

accessing a trained version of the neural network, which has been trained based on images, preferably RGB images, labelled in accordance with potential obstacles (40) therein, and retraining (S304) the trained version accessed based on said image pairs.

8. The computer-implemented method according to any one of claims **2** to **7,** wherein

each of said area (45) and said given area is an area (45) ahead of the vehicle (2), whereby each of said camera (223) and said infrared sensor (224) is configured to sense the area (45) ahead of the vehicle (2), and
each of the low-beam lighting system (236) and the high-beam infrared lighting system (234) is arranged at a front of the vehicle (2).

9. The computer-implemented method according to any one of claims **1** to **7,** wherein
the method further comprises triggering an execution of said algorithmic cycles upon activation (S310: Yes) of the low-beam lighting system, whereby said algorithmic cycles are repeatedly performed after the activation of the low-beam lighting system.

10. A computerized system (100) for detecting obstacles (40) in an area (45) adjacent a vehicle (2) based on low-beam images (32), wherein the computerized system (100) includes

a memory (112, 113, 121), and
processing means (110) configured to interact with said memory to implement all the steps of a method according to any one of claims **1** to **9.**

11. A vehicle (2), wherein the vehicle comprises

a sensing system (220) including at least one camera (223) and, preferably, at least one infrared sensor (224),
a lighting system (230) comprising a low-beam lighting system (236) and, preferably, a high-beam infrared lighting system (234),
a control unit (250), which preferably is a braking control unit (250), and
the computerized system (100) according to claim **10,** wherein the computerized system (100) is

configured to access images produced by the sensing system (220), and
operatively connected to the control unit (250) to signal the latter (S318) and autonomously trigger (S319) a behavioural change of the vehicle (2), in operation.

12. The vehicle (2) according to claim **11,** wherein

the sensing system (220) includes the at least one infrared sensor (224), and
the lighting system (230) includes the high-beam infrared lighting system (234).

13. The vehicle (2) according to claim **12,** wherein

the sensing system (220) comprises integrated devices (222, 232),
one or more of the integrated devices (232) include, each, a dual light source, capable of illuminating both in the visible range and the IR range, and,
preferably, one or more other ones of the integrated devices (232) integrate, each, one of the at least one camera (223) and one of the at least one infrared sensor (224).

14. The vehicle (2) according to claim **12** or **13,** wherein the high-beam infrared lighting system includes one of

a set of one or more digital micromirror device chips,
a set of one or more LED arrays, and
a set of one or more laser scan headlamps.

15. The vehicle (2) according to any one of claims **11** to **14,** wherein

the lighting system (230) includes a headlight system, which is configured to illuminate an area (45) ahead of the vehicle (2), and
the sensing system (220) is configured to sense said area (45) ahead of the vehicle, whereby each of the at least one camera (223) and the at least one infrared sensor (224), if any, is preferably arranged at a front of the vehicle (2).

16. A computer program product for detecting obstacles (40) in an area (45) adjacent a vehicle (2) based on low-beam images (32), wherein the computer program product comprises a computer readable storage medium having program instructions embodied therewith, the program instructions executable by processing means to cause the latter to perform steps of a method according to any according to any one of claims **1** to **9.**

100 ⬎

COMPUTER 101

PROCESSOR SET 110

PROCESSING CIRCUITRY 120   CACHE 121

COMMUNICATION FABRIC 111

VOLATILE MEMORY 112

PERSISTENT STORAGE 113

OPERATING SYSTEM 122

SAMPLING MODULE, CHANNELING MODULE, ML INFERENCE MODULE, AND SIGNALLING MODULE 150

PERIPHERAL DEVICE SET 114

UI DEVICE SET 123   STORAGE 124   OTHER STORAGE 125

NETWORK/INTERFACE MODULE 115

FIG. 1

FIG. 2

S300: Preliminary phases (training and fine-tuning)

S302: Train computational model

S304: Re-train computational model

S305: Vehicle operation (runtime)

No ⟲ S310: Low-beam lighting activated?

Yes

S311: Acquire RGB images and IR images

S312: Sample image pairs and register images

Low-beam RGB image 32

High-beam IR image 34

S314: Decompose RGB image into n channels

S315: Feed channels into n + 1 input channels of computational model (ANN)

316: Perform inference with ANN (single forward pass)

S317: Obstacle detected?

Yes          No

S318: Signal braking unit controller

S319: Brake

S320: Start new vehicle manoeuver

FIG. 3

FIG. 4A

FIG. 4B

FIG. 5

Europäisches Patentamt

European Patent Office

Office européen des brevets

# EUROPEAN SEARCH REPORT

**Application Number**

EP 24 21 5848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DENG LIANG ET AL: "Night Target Detection Approach Based on Near Infrared Image Fusion on Vehicles", 2022 5TH INTERNATIONAL CONFERENCE ON PATTERN RECOGNITION AND ARTIFICIAL INTELLIGENCE (PRAI), IEEE, 19 August 2022 (2022-08-19), pages 755-759, XP034202264, DOI: 10.1109/PRAI55851.2022.9904229 [retrieved on 2022-10-05] * Section III; page 756 * * Section IV; page 758 * * page 756; figure 1 * * Section IV; page 757 * * Section III.C; page 757 * * figure 8 * * Section I; page 755 * * Section II.B; page 755 * * Section III.B; page 756 * * page 757; figure 3 * * Section III.B; page 756 * * Section IV; page 757 * * figure 6 * * figure 5 * * Section IV; page 758 * ----- -/-- | 1-16 | INV. G06V10/141 G06V10/143 G06V10/25 G06V10/82 G06V20/58 G06V10/80 |

**TECHNICAL FIELDS SEARCHED (IPC)**

G06V

The present search report has been drawn up for all claims

| Place of search | Date of completion of the search | Examiner |
|---|---|---|
| The Hague | 31 January 2025 | Gissot, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 ................................................................
& : member of the same patent family, corresponding document

EPO FORM 1503 03.82 (P04C01)

<table>
<tr><td>Europäisches Patentamt<br>European Patent Office<br>Office européen des brevets</td><td>**EUROPEAN SEARCH REPORT**</td><td>**Application Number**<br><br>EP 24 21 5848</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAYASHI YUSUKE ET AL: "Object Detection in Poor-visibility Scenarios Using a Night-vision System", 2023 30TH INTERNATIONAL WORKSHOP ON ACTIVE-MATRIX FLATPANEL DISPLAYS AND DEVICES (AM-FPD), FTFMD, 4 July 2023 (2023-07-04), pages 24-27, XP034438396, [retrieved on 2023-10-04] * Abstract; page 24 * * Section 1; page 24 * * page 24; figure 1 * * Section; page 25 * * page 25; figure 2 * | 1,10,11 | |
| X | NIE CHANG ET AL: "Monocular Vision based Perception System for Nighttime Driving", 2022 8TH INTERNATIONAL CONFERENCE ON CONTROL, AUTOMATION AND ROBOTICS (ICCAR), IEEE, 8 April 2022 (2022-04-08), pages 258-263, XP034129747, DOI: 10.1109/ICCAR55106.2022.9782645 [retrieved on 2022-05-31] * Section III Methodology; page 260; figure 1 * * Section III.F; page 262 * | 1,10,11 | **TECHNICAL FIELDS SEARCHED (IPC)** |
| A | US 10 616 507 B2 (MAGNA ELECTRONICS INC [US]) 7 April 2020 (2020-04-07) * Summary of the invention; column 2, line 16 - line 31 * | 1-16 | |

The present search report has been drawn up for all claims

| Place of search | Date of completion of the search | Examiner |
|---|---|---|
| The Hague | 31 January 2025 | Gissot, Samuel |

EPO FORM 1503 03.82 (P04C01)

## ANNEX TO THE EUROPEAN SEARCH REPORT
## ON EUROPEAN PATENT APPLICATION NO.

EP 24 21 5848

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| US 10616507 B2 | 07-04-2020 | US | 2010289885 A1 | 18-11-2010 |
| | | US | 2013250103 A1 | 26-09-2013 |
| | | US | 2015092059 A1 | 02-04-2015 |
| | | US | 2018302575 A1 | 18-10-2018 |
| | | US | 2020236306 A1 | 23-07-2020 |
| | | WO | 2009046268 A1 | 09-04-2009 |

EPO FORM P0459

For more details about this annex : see Official Journal of the European Patent Office, No. 12/82